(19) Europäisches Patentamt / European Patent Office / Office européen des brevets

(11) **EP 3 288 176 B1**

(12) **EUROPEAN PATENT SPECIFICATION**

(45) Date of publication and mention of the grant of the patent:
**02.12.2020 Bulletin 2020/49**

(21) Application number: **16782814.4**

(22) Date of filing: **21.04.2016**

(51) Int Cl.:
*H02P 6/06* (2006.01)          *H02P 6/08* (2016.01)
*H02P 6/182* (2016.01)         *F25B 49/02* (2006.01)

(86) International application number:
**PCT/JP2016/002137**

(87) International publication number:
**WO 2016/170792 (27.10.2016 Gazette 2016/43)**

(54) **MOTOR DRIVE DEVICE AND REFRIGERATOR EMPLOYING SAME**

MOTORANSTEUERUNGSVORRICHTUNG UND KÜHLSCHRANK DAMIT

DISPOSITIF D'ENTRAÎNEMENT DE MOTEUR ET RÉFRIGÉRATEUR L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2015 JP 2015088898**

(43) Date of publication of application:
**28.02.2018 Bulletin 2018/09**

(73) Proprietor: **Panasonic Intellectual Property Management Co., Ltd.**
**Osaka-shi, Osaka 540-6207 (JP)**

(72) Inventors:
• **TAKEOKA, Yoshinori**
  **Osaka-shi**
  **Osaka 540-6207 (JP)**
• **TANAKA, Hidehisa**
  **Osaka-shi**
  **Osaka 540-6207 (JP)**

(74) Representative: **Eisenführ Speiser**
**Patentanwälte Rechtsanwälte PartGmbB**
**Postfach 31 02 60**
**80102 München (DE)**

(56) References cited:
JP-A- 2003 028 553      JP-A- 2004 254 460
JP-A- 2005 090 466      JP-A- 2006 121 774
JP-A- 2014 070 783      US-A1- 2006 261 766
US-A1- 2013 002 178

EP 3 288 176 B1

**Description**

TECHNICAL FIELD

The present invention relates to a motor drive device for driving a brushless DC motor and a refrigerator employing the device.

BACKGROUND ART

Conventionally, a motor drive device of this type drives a motor under pulse width modulation (PWM) control as follows. If a driving speed of the motor is higher than a target speed, the device reduces an ON time of PWM, whereas if the driving speed of the motor is lower than the target speed, the device increases the ON time.

In addition, a refrigerator that cools using a conventional motor drive device is provided with a four-way valve inside a refrigeration cycle to form a normal refrigeration cycle at the time of driving the compressor. In addition, at the time of stoppage of the compressor, the four-way valve is switched so as to reduce a pressure difference between an inlet and an outlet of the compressor by separating a high-pressure side from a low-pressure side in the refrigeration cycle and passing a high-pressure refrigerant from a dryer to the compressor. This configuration prevents the refrigerant on the high-pressure side from flowing into an evaporator at the time of stoppage of the compressor and keeps a temperature of the evaporator low to prevent a rise in refrigerator temperature, thereby achieving energy saving in the refrigerator (see, for example, PTL 1).

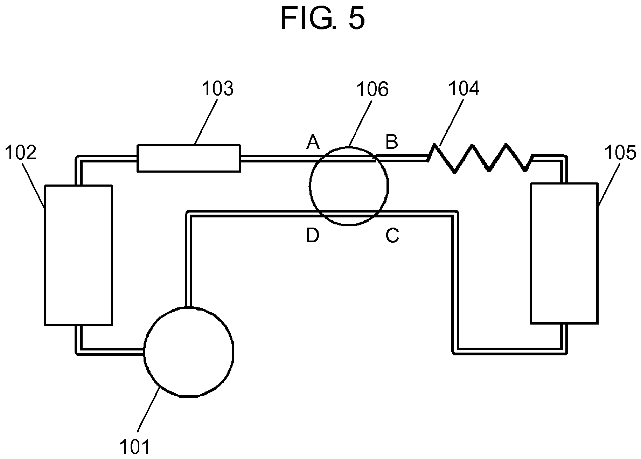

FIG. 5 shows a refrigeration cycle in a refrigerator using a conventional motor drive device disclosed in PTL 1. As shown in FIG. 5, the refrigeration cycle is formed through a low-pressure shell type compressor 101, condenser 102, dryer 103, capillary 104, and evaporator 105 in the order named. The refrigerant flows in the refrigeration cycle from compressor 101 to evaporator 105 in the above order. Four-way valve 106 has inlet A connected to dryer 103, outlet B connected to capillary 104, inlet C connected to evaporator 105, and outlet D connected to compressor 101. During the operation of compressor 101, four-way valve 106 causes inlet A to communicate with outlet B and also causes inlet C to communicate with output D. In addition, during stoppage of compressor 101, four-way valve 106 causes inlet A to communicate with outlet D and also causes inlet C to communicate with outlet B.

This forms a closed circuit in a high-pressure area provided with compressor 101, condenser 102, and dryer 103 and a closed circuit in a low-pressure area provided with capillary 104 and evaporator 105 during stoppage of the compressor. During a refrigeration cycle operation, a normal refrigeration cycle is formed to enable a regular cooling operation. In addition, at the time of stoppage of a refrigeration cycle, the motor drive device can be started while the pressure difference between the inlet and the outlet of the compressor is reduced and load torque fluctuations are reduced by separating a high-pressure side from a low-pressure side in the refrigeration cycle and passing the high-pressure refrigerant from the dryer to the compressor. This configuration prevents the high-pressure side refrigerant from flowing into evaporator 105 and a rise in temperature of evaporator 105 during stoppage of the refrigeration cycle. This makes it possible to reduce a loss in the refrigeration cycle.

The conventional configuration described above, however, cannot cope with large load torque fluctuations at the time of startup of the motor drive device, and needs to balance between an inlet pressure and an outlet pressure of compressor 101 by using four-way valve 106 at the time of stoppage of compressor 101 to stably start up compressor 101. This leads to complexity and an increase in cost of the system.

PTL 2 discloses a drive method for a brushless motor and a drive control apparatus therefor, in which control parameters are calculated by revolution number control means or motor current control means in accordance with the deviation between a target value and an actual value, a manipulated variable is computed by conduction phase control means on the basis of the calculated control parameters, an advance angle magnitude is computed from the relationship between a manipulated variable and an advance angle magnitude as designed and created beforehand, on the basis of the computed manipulated variable, and the value of a conduction phase angle of a drive circuit as designed on the basis of a rotation position signal or a motor current signal is corrected using the information of the computed advance angle magnitude.

PTL 3 discloses a refrigeration cycle control device comprising a PWM cycle timer that sets a PWM cycle, and a PWM duty timer that sets a PWM duty, changes the PWM duty by changing a set value to the PWM duty timer, and can control an output voltage of an inverter device by performing the speed control of a brushless motor. The control device comprises an average PWM duty timer setting part that sets an average value of the PWM duty timer during one revolution of the brushless motor; a storing means that stores a plurality of prescribed values corresponding to the number of revolutions of the brushless motor in a specified zone; and a torque control output circuit that outputs the PWM duties in the specified zone and in a zone other than the specified zone at different duties, by adding or subtracting a prescribed value to the average PWM duty timer set value corresponding to the number of the revolutions.

Citation List

Patent Literature

PTL 1: Unexamined Japanese Patent Publication No. 10-028395
PTL 2: US patent application 2006/0261766
PTL 3: Unexamined Japanese Patent Publication No. 2004-254460

SUMMARY OF THE INVENTION

The present invention has been made in consideration of the above conventional problems and provides a motor drive device that stably starts up even while load torque fluctuations are large.

More specifically, a motor drive device according to an example of an exemplary embodiment of the present invention includes a brushless DC motor configured to drive a load, the brushless DC motor including a permanent magnet and a stator having a three-phase winding, a speed controller configured to decide a PWM ON ratio for performing PWM control on the brushless DC motor, a PWM ON ratio increasing-reducing unit configured to increase or reduce the PWM ON ratio in accordance with a driving speed of the brushless DC motor, a drive unit configured to perform the PWM control to drive the brushless DC motor in accordance with the PWM ON ratio decided by the PWM ON ratio increasing-reducing unit, a position detector configured to detect a rotational position of a rotor based on an induced voltage generated in the three-phase winding of the stator, and a speed detector configured to calculate a current driving speed of the brushless DC motor and an average speed of one past rotation from position information detected by the position detector. In addition, the PWM ON ratio increasing-reducing unit sets the PWM ON ratio to a ratio equal to or lower than the PWM ON ratio decided by the speed controller in an interval in which the driving speed of the brushless DC motor is lower than a predetermined speed, and sets the PWM ON ratio to a ratio equal to or higher than the PWM ON ratio decided by the speed controller in an interval in which the driving speed is higher than the predetermined speed, wherein the predetermined speed is the average speed of one past rotation.

With such configuration, the motor drive device increases output torque of the brushless DC motor in an interval in which a load becomes heavy, and reduces the output torque of the brushless DC motor in an interval in which the load becomes light. In an interval in which required torque is small and a speed is low, excessive output torque is suppressed, whereas in an interval in which the torque is insufficient and the speed is high, the output torque can be increased. This makes it possible to start up the motor drive device while reducing a change in speed and vibration even under a condition in which load torque fluctuations are large.

In addition, with regard to vibration at the time of startup of the motor drive device, it is possible to change an applied voltage in accordance with torque fluctuations and adjust a current flowing in the brushless DC motor. This can reduce vibrations at the time of startup of the motor drive device.

The above configuration can also reduce a peak current by reducing the PWM ON ratio to make it difficult for a current to flow in an interval in which the driving speed of the brushless DC motor decreases, which is an interval in which an induced voltage of the brushless DC motor decreases and a current easily flows. This makes it possible to achieve energy saving by the use of a high-efficiency motor with a small demagnetizing current and to achieve a reduction in cost by the use of an element with a small current rating.

A motor drive device according to an example of an exemplary embodiment of the present invention may be configured to drive a compressor in a refrigeration cycle in which the compressor, a condenser, a capillary, an evaporator, and the compressor are connected in the order named and to start up while a pressure difference is left between an inlet side and an outlet side of the compressor.

This configuration allows the motor drive device to start up even while there is a pressure difference between the inlet side and the outlet side of the compressor, thereby reducing a loss in the refrigeration cycle without raising a temperature of the evaporator with a simple system configuration at a low cost.

In addition, even if a power failure occurs during operation of the compressor and power recovery is achieved before balancing between the inlet pressure and the outlet pressure of the compressor, the compressor can be immediately started up, thus quickly providing cooling even in a bad power supply condition in which power fails frequently.

A motor drive device according to an example of the exemplary embodiment of the present invention may be configured such that a pressure difference between an inlet and an outlet of a compressor is set to at least 0.05 MPa or more. This configuration can reduce a loss in a refrigeration cycle while reducing a progress of deterioration due to an increase in vibration of the motor drive device and maintaining reliability of the compressor.

A motor drive device according to an example of the exemplary embodiment of the present invention may be configured to drive a compressor in a refrigerator configured to provide a valve between the compressor and a condenser so as to close the valve at the time of stoppage of the compressor and open the valve at the time of driving the compressor. This configuration can further reduce a loss in a refrigeration cycle without further raising a temperature of an evaporator by preventing a high-temperature, the high-pressure refrigerant from returning from the condenser to the compressor.

A motor drive device according to an example of the exemplary embodiment of the present invention may be configured such that the position detector is further configured to detect a zero-cross point by comparing the induced voltage and a reference voltage for the zero-cross point of the induced voltage, and the speed detector is further configured to detect a zero-cross point detection interval, which is an interval between the zero-cross point and a next zero-cross point of a plurality of zero-cross points detected during the one past rotation, so as to calculate the average speed of the one past rotation from a sum of the zero-cross point detection interval.

A motor drive device according to an example of the exemplary embodiment of the present invention may be configured such that an interval in which a current value of the zero-cross point detection interval is lower than an average of a plurality of the zero-cross point detection interval of the one past rotation corresponds to the interval in which the driving speed of the brushless DC motor is lower than the predetermined speed, and an interval in which the current value of the zero-cross point detection interval is smaller than the average of the plurality of the zero-cross point detection interval of the one past rotation corresponds to the interval in which the driving speed of the brushless DC motor is higher than the predetermined speed.

Furthermore, a system can be formed with a simple configuration at a low cost as compared with a configuration using a four-way valve.

BRIEF DESCRIPTION OF DRAWINGS

FIG. 1 is a block diagram showing a motor drive device according to an exemplary embodiment of the present invention.
FIG. 2 is a transition diagram showing changes in PWM ON ratio in the exemplary embodiment of the present invention.
FIG. 3 is a flowchart showing an operation procedure in the exemplary embodiment of the present invention.
FIG. 4 is a transition diagram showing changes in zero-cross point detection interval and load torque of a brushless DC motor according to the exemplary embodiment of the present invention.
FIG. 5 is a view showing a refrigeration cycle in a conventional refrigerator.

DESCRIPTION OF EMBODIMENT

An exemplary embodiment of the present invention will be described below with reference to the accompanying drawings. Note that the present invention is not limited to this exemplary embodiment.

(First exemplary embodiment)

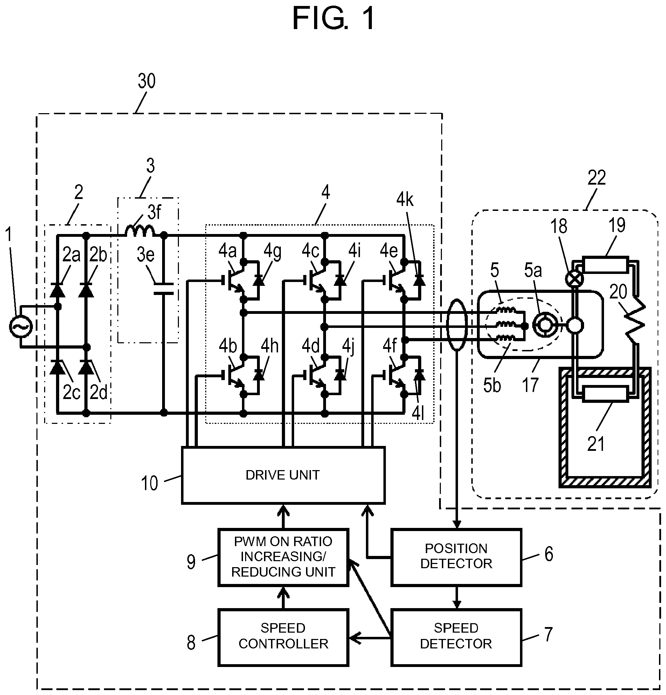

FIG. 1 is a block diagram showing a motor drive device according to the exemplary embodiment of the present invention. With reference to FIG. 1, AC power supply 1 is a general commercial power supply, which is a 50 Hz or 60 Hz power supply with an effective value of 100 V in Japan. Motor drive device 30 is connected to AC power supply 1 and drives brushless DC motor 5. Motor drive device 30 will be described below.

Rectifying circuit 2 rectifies AC power input from AC power supply 1 into DC power, and is constituted by four rectifying diodes 2a to 2d that are bridge-connected to each other.

Smoothing unit 3 is connected to the output side of rectifying circuit 2, and smooths an output from rectifying circuit 2. Smoothing unit 3 is constituted by smoothing capacitor 3e and reactor 3f. An output from smoothing unit 3 is input to inverter 4.

In addition, smoothing capacitor 3e and reactor 3f are set to make a resonance frequency become higher than an AC power supply frequency by 40 times. This sets a current with the resonance frequency out of the range of harmonics regulations for the power supply and enables a reduction in harmonic current. In addition, providing smoothing capacitor 3e satisfying such a condition will make a bus voltage contain a large ripple component and a current flowing from AC power supply 1 to smoothing capacitor 3e become similar to a frequency component from AC power supply 1. This can reduce harmonic currents.

Note that reactor 3f is only required to be provided between AC power supply 1 and smoothing capacitor 3e regardless of whether it is provided before or after any one of rectifying diodes 2a to 2d. In addition, when a common mode filter forming a harmonic removal means is provided in the circuit, a frequency of reactor 3f is set in consideration of a composite component with a reactance component of the harmonic removal means.

Inverter 4 converts DC power obtained by making a voltage from smoothing unit 3 contain large ripple components at a period twice a power supply period of AC power supply 1 into AC power. Inverter 4 is formed by three-phase bridge-connecting six switching elements 4a to 4f. In addition, six reflux diodes 4g to 4l are inversely connected to switching elements 4a to 4f, respectively.

Brushless DC motor 5 is constituted by rotor 5a having a permanent magnet and stator 5b having a three-phase winding. Brushless DC motor 5 rotates rotor 5a by making a three-phase AC current generated by inverter 4 flow in the three-phase winding of stator 5b.

Position detector 6 detects a magnetic pole position of stator 5b from an induced voltage generated in the three-phase winding of stator 5b, a current flowing in the three-phase winding of stator 5b, an applied voltage, and the like. In this exemplary embodiment, position detector 6 acquires a terminal voltage of brushless DC motor 5, and detects a relative magnetic pole position of rotor 5a of brushless DC motor 5. More specifically, position detector 6 detects a relative rotational position of rotor 5a on the basis of the induced voltage generated in the three-phase winding of stator 5b. More specifically, position detector 6 detects a zero-cross point by comparing the induced voltage and a reference voltage. A reference voltage for the zero-cross point of the induced voltage may be set by generating a virtual midpoint from terminal voltages corresponding to three phases. Alternatively, a DC bus voltage may be acquired as a reference voltage for the zero-cross point of the induced voltage. In this exemplary embodiment, the virtual midpoint is set as the reference voltage for a zero-cross point of the induced voltage. A scheme for detecting from the induced voltage has a simple configuration and hence can be formed at a lower cost.

Speed detector 7 calculates a current driving speed of brushless DC motor 5 and an average speed of one past rotation from position information detected by position detector 6. In this exemplary embodiment, speed detector 7 measures a time from detection of the zero-cross point of the induced voltage, and calculates a time from detection of the zero-cross point of the induced voltage as a current speed. Speed detector 7 detects an interval between induced voltage zero-cross points as an interval elapsed time, calculates a sum of interval elapsed times in one past rotation of brushless DC motor 5, and calculates the average speed of one rotation from the calculation result.

Speed controller 8 compares the average speed of one rotation detected by speed detector 7 with a target speed, and performs the following control. If the target speed is higher than the average speed of one rotation, speed controller 8 increases an applied voltage to brushless DC motor 5. If the target speed is lower than the average speed of one rotation, speed controller 8 reduces the applied voltage to brushless DC motor 5. If the target speed matches the average speed, speed controller 8 maintains the applied voltage to brushless DC motor 5.

When a current speed of brushless DC motor 5, detected by speed detector 7, is higher than a predetermined speed decided in advance, PWM ON ratio increasing-reducing unit 9 increases the applied voltage to brushless DC motor 5 which is set by speed controller 8. When the current speed of brushless DC motor 5 is lower than the predetermined speed, PWM ON ratio increasing-reducing unit 9 reduces the applied voltage to brushless DC motor 5 which is set by speed controller 8. The predetermined speed may be set in advance to a fixed value or decided from a product of a bus voltage and a duty width. Setting the predetermined speed in advance will greatly simplify processing and enable implementation by a low-cost, low-performance microcomputer. When the predetermined speed is decided from the product of the bus voltage and the duty width, the speed of brushless DC motor 5 changes in accordance with magnitude of the applied voltage to brushless DC motor 5. This enables more stable driving in accordance with a state. Assume that this exemplary embodiment uses a scheme of setting the predetermined speed in advance. A width by which the applied voltage is increased and reduced may be changed in accordance with a predetermined value and a predetermined speed, which are set in advance. Setting the predetermined speed and the like in advance implements simple processing and a simple configuration for a startup operation within an estimated range at a low cost. Using a scheme of changing the applied voltage in accordance with the predetermined speed will change the applied voltage in accordance with a driving state, thus coping with a wide load range. Assume that in the exemplary embodiment, the predetermined speed is set to a value set in advance.

Drive unit 10 outputs supply timing of power to be supplied by inverter 4 to the three-phase winding of brushless DC motor 5 and a drive signal for PWM control on the basis of a position of rotor 5a of the brushless DC motor, which is detected by position detector 6. More specifically, a drive signal turns on or off (to be written as "on/off" hereinafter) each of switching elements 4a to 4f of inverter 4. With this operation, optimal AC power is applied to stator 5b to rotate rotor 5a and drive brushless DC motor 5. Drive waveforms include a rectangular wave and sine wave.

In addition, drive unit 10 calculates and outputs a PWM duty width on the basis of the applied voltage set by PWM ON ratio increasing-reducing unit 9.

Drive unit 10 decides which phase is to be energized on the basis of information from position detector 6. In this exemplary embodiment, because driving is performed by a 120° rectangular wave, switching elements of an upper arm (switching elements connected to a positive side of a DC voltage input to inverter 4) 4a, 4c, and 4e are energized at 120° intervals. Switching elements of a lower arm (switching elements connected to a negative side of a DC voltage input to inverter 4) 4b, 4d, and 4f are energized at 120° intervals in the same manner as that described above. OFF periods exist between energization periods of switching elements 4a and 4b, between energization periods of switching elements 4c and 4d, and between energization periods of switching elements 4e and 4f at 60° intervals.

Refrigerator 22 using motor drive device 30 according to this exemplary embodiment will be described next.

Compressor 17 is mounted in refrigerator 22. A crank shaft converts rotary movement of rotor 5a of brushless DC motor 5 into reciprocal movement. A piston connected to the crank shaft reciprocally moves in a cylinder to compress a refrigerant in the cylinder. That is, compressor 17 is constituted by brushless DC motor 5, the crank shaft, the piston, and the cylinder.

Compressor 17 uses an arbitrary compression scheme (mechanical scheme) such as a rotary or scroll type compression scheme. This exemplary embodiment will exemplify a reciprocal type compressor. Reciprocal type compressor 17 undergoes large fluctuations in torque in inhalation and compression processes, and hence large fluctuations in speed and current value.

The refrigerant compressed by compressor 17 forms a refrigeration cycle that sequentially passes through valve 18, condenser 19, decompressor 20, and evaporator 21 and returns to compressor 17 again. In this case, condenser 19 dissipates heat, and evaporator 21 absorbs heat, thereby performing a cooling operation and a heating operation. Such a refrigeration cycle is formed in refrigerator 22.

As valve 18, an electromagnetic valve capable of opening/closing by energization is used. In this exemplary embodiment, valve 18 is set in an open state to cause compressor 17 to communicate with condenser 19 during an operation of compressor 17. This causes the refrigerant to flow in the refrigeration cycle. During stoppage of compressor 17, valve 18 is set in a closed state to close between compressor 17 and condenser 19 so as to prevent the refrigerant from flowing.

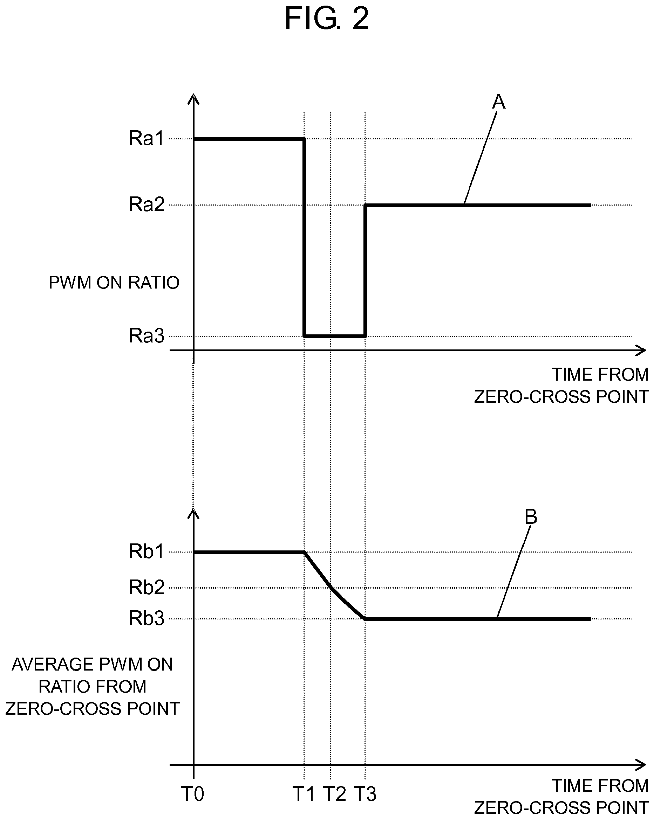

An operation of motor drive device 30 having the above configuration will be described with reference to FIG. 2. FIG. 2 is a transition diagram showing changes in PWM ON ratio in the exemplary embodiment of the present invention. With reference to FIG. 2, an abscissa represents a time from zero-cross point detection. With reference to FIG. 2, an ordinate of plot A represents a duty ON ratio at the time of PWM control on inverter 4, and an ordinate of plot B represents an average PWM ON ratio from a zero-cross point.

Ratio Rb1 is a maximum average PWM ON ratio of a voltage for application of a voltage when the driving speed of brushless DC motor 5 is higher than the average speed of one past rotation, and is equal to Ra1. Ratio Rb2 is a PWM ON ratio decided by speed controller 8. Ratio Rb3 is a minimum average PWM ON ratio for application of a voltage when the driving speed of brushless DC motor 5 is lower than the average speed of one past rotation, and is equal to Ra2. Ratio Ra3 is a minimum PWM ON ratio required for position detector 6 to detect a magnetic pole position of rotor 5a.

Time T0 indicates zero-cross point detection timing. Time T2 indicates an average time of zero-cross point detection intervals obtained from the average speed of one past rotation. Assume that a three-phase, four-pole motor according to this exemplary embodiment requires 12 commutations for one rotation and has an average speed of 3 r/s. In this case, the motor makes commutations corresponding to a product of 12 x 3 in 1 sec, that is, 36 commutations, and hence an average time of zero-cross point detection intervals is about 27.8 ms, which is obtained by dividing 1 sec by 36. Time T1 is expressed by

[Math 1]

$$T1 = \frac{Rb2 - Ra3}{Ra1 - Ra3} \times T2$$

where, $Ra1 \geqq Rb2 > Ra3$

More specifically, because the average PWM ON ratio becomes PWM ON ratio Rb2 decided by speed controller 8 at time T2, time T1 indicates timing at which the PWM ON ratio is switched to PWM ON ratio Ra3 during an operation at PWM ON ratio Ra1 from time T0. Time T3 is expressed by

[Math 2]

$$T3 = \frac{Rb2 - Ra3}{Rb3 - Ra3} \times T2$$

where, $Rb2 \geqq Rb3 > Ra3$

More specifically, time T3 indicates timing at which the average PWM ON ratio becomes PWM ON ratio Rb3 when an operation continues at PWM ON ratio Ra3 from time T2, and timing at which the PWM ON ratio is switched from Ra3 to Ra2.

The PWM ON ratio actually changes as follows. As indicated by plot A in FIG. 2, the PWM ON ratio is set to Ra1 from T0 to T1, and is set to Ra3 from T1 to T2. This drives motor drive device 30 at a PWM ON ratio higher than the PWM ON ratio decided by speed controller 8 at a speed higher than the average speed. Motor drive device 30 is continuously driven at Ra3 from time T2 to time T3, and is driven at Ra2 after T3. As a consequence, motor drive device 30 is driven at a PWM ON ratio not higher than that decided by speed controller 8 at a speed not higher than the average speed. In this case, a maximum of the average PWM ON ratio is Rb1, and a minimum of the average PWM ON ratio is Rb3. At this time, the relation between Rb1, Rb2, Rb3, and Ra3 is expressed as follows.

$$Rb1 \geq Rb2 \geq Rb3 > Ra3 \quad ... \quad (3)$$

As PWM ON ratio Ra3, a PWM ON ratio that at least allows position detector 6 to detect a magnetic pole position of rotor 5a is ensured.

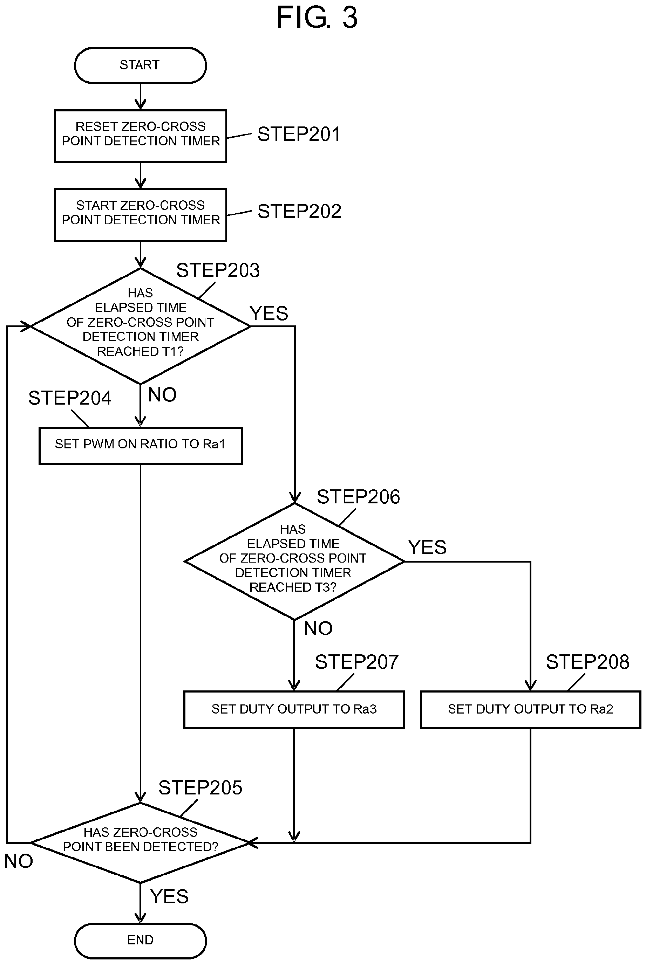

A detailed control method for motor drive device 30 will be described next with reference to FIG. 3. FIG. 3 is a flowchart showing an operation procedure in the exemplary embodiment of the present invention. The flowchart shown in FIG. 3 is invoked when zero-cross point detection is performed. First of all, in STEP 201, when the zero-cross point detection is performed, zero-cross point detection timer indicating a time elapsed from the zero-cross point detection is cleared, and the process shifts to STEP 202.

In STEP 202, the zero-cross point detection timer is started to measure a time elapsed from the zero-cross point detection, and the process shifts to STEP 203.

In STEP 203, it is determined whether an elapsed time of the zero-cross point detection timer is equal to or more than T1. If the elapsed time is less than T1, the process shifts to STEP 204. If the elapsed time is equal to or more than T1, the process shifts to STEP 206. In this case, it is determined that the elapsed time of the zero-cross point detection timer is less than T1, and hence the process shifts to STEP 204.

In STEP 204, an ON ratio of inverter 4 is set for PWM control on brushless DC motor 5. In STEP 204, the PWM ON ratio is set to Ra1, and the process shifts to STEP 205.

In STEP 205, it is determined whether position detector 6 has detected a zero-cross point. If position detector 6 has detected no zero-cross point, the process shifts to STEP 203 again. If position detector 6 has detected the zero-cross point, the processing is terminated.

In contrast to this, if it is determined in STEP 203 that the elapsed time of the zero-cross point detection timer is equal to or more than T1, the process shifts to STEP 206.

It is determined in STEP 206 whether the elapsed time of the zero-cross point detection timer is equal to or more than T3 when an average PWM ON ratio in an interval from the zero-cross point detection to the current time is equal to a minimum PWM ON ratio when the driving speed is lower than the average speed. If the elapsed time is less than T3, the process shifts to STEP 207. If the elapsed time is equal to more than T3, the process shifts to STEP 208. Assume that in this case, it is determined that the elapsed time of the zero-cross point detection timer is less than T3, and the process shifts to STEP 207.

In STEP 207, an ON ratio of inverter 4 is set when PWM control is performed on brushless DC motor 5. In this exemplary embodiment, the PWM ON ratio is set to Ra3 in STEP 207, and the process shifts to STEP 205.

In contrast to this, if it is determined in STEP 206 that the elapsed time of the zero-cross point detection timer is equal to or more than T3, the process shifts to STEP 208.

In STEP 208, an ON ratio of inverter 4 is set when PWM control is performed on brushless DC motor 5. In this exemplary embodiment, the PWM ON ratio is set to Ra2 in STEP 208, and the process shifts to STEP 205.

If it is determined in STEP 205 that the zero-cross point has been detected, the processing is terminated. When the process shifts to the end of the processing via STEP 204, it indicates that the zero-cross point has been detected before T2 representing a current average zero-cross point detection interval. This interval is therefore an interval in which the driving speed is higher than the average speed. Consequently, during this interval, PWM ON ratio Rb1 higher than PWM ON ratio Rb2 decided by speed controller 8 is output as the average PWM ON ratio.

In addition, when the process shifts to the end of the processing via STEP 208, it indicates that the current interval is an interval in which the driving speed is lower than the average speed because the zero-cross point is detected after T2 representing a current average zero-cross point detection interval. Consequently, during this period, PWM ON ratio Rb3 lower than PWM ON ratio Rb2 decided by speed controller 8 is output as the average PWM ON ratio.

In addition, when the process shifts to the end of the processing via STEP 207, the elapsed time of the zero-cross point detection timer is T2, and the average PWM ON ratio matches PWM ON ratio Rb2 decided by speed controller

**EP 3 288 176 B1**

8. If the elapsed time of zero-cross point detection timer is earlier than T2, the average PWM ON ratio is higher than PWM ON ratio Rb2 decided by speed controller 8 between Rb1 and Rb2. If the elapsed time of zero-cross point detection timer is later than T2, the average PWM ON ratio is lower than PWM ON ratio Rb2 between Rb2 and Rb3.

Invoking the above flowchart at timing of the zero-cross point detection makes it possible to increase the PWM ON ratio in an interval in which the driving speed is higher than the average speed of one past rotation and to reduce the PWM ON ratio in an interval in which the driving speed is lower than the average speed. As the speed of brushless DC motor 5 decreases, a change in speed increases with respect to a change in the same load. Accordingly, when a load torque greatly changes at the time of startup, an induced voltage of brushless DC motor 5 especially decreases in an interval in which the speed is low, and a current increases while an applied voltage is constant. For this reason, it is necessary to use a large-capacity element to prevent breakdown of inverter 4 or to use a low-efficiency brushless DC motor to increase a demagnetizing limit current of the motor.

A relationship between efficiency and demagnetizing limit currents of brushless DC motor 5 will be described in detail below. Increasing the number of turns of the winding of stator 5b will increase torque obtained by the same current, and hence reducing the current required to output necessary torque, thereby achieving an increase in efficiency. However, because demagnetizing magnetic force remains the same, which irreversibly reduces the magnetic force of the permanent magnet in rotor 5a, the demagnetizing limit current, which is a current limit at which rotor 5a is not demagnetized, decreases with an increase in the number of turns of the winding. That is, in order to make a large current flow, a large demagnetizing limit current is required. This leads to the use of a low-efficiency motor.

Furthermore, overcurrent protection provided to prevent these problems sometimes causes the brushless DC motor to stop driving. This exemplary embodiment is configured to reduce a PWM ON ratio and reduce an applied voltage to reduce a current value in an interval in which the driving speed is low. This makes it possible to use an element having a relatively small capacity for inverter 4 or to use a high-efficiency motor.

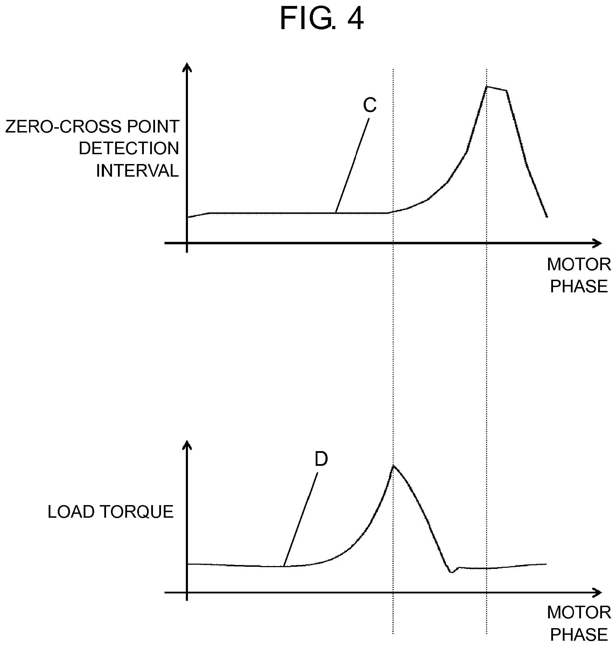

FIG. 4 shows effects obtained by increasing a PWM ON ratio in an interval in which the driving speed is high and reducing the PWM ON ratio in an interval in which the driving speed is low. FIG. 4 is a transition diagram showing changes in zero cross detection interval and load torque of the brushless DC motor according to the exemplary embodiment of the present invention. With reference to FIG. 4, an abscissa represents a phase of brushless DC motor 5, along which phases corresponding to one rotation are plotted. With reference to FIG. 4, an ordinate of plot C represents zero-cross point detection intervals, and plot D represents changes in load torque. As shown in FIG. 4, when differential pressure startup is performed, a load torque and a zero-cross point detection interval greatly change. However, a peak of an increase in load torque does not match a peak of an increase in actual zero-cross point detection interval, and a response delay exists in the zero-cross point detection interval with respect to the load torque.

In an interval in which a position detection interval is long and the driving speed is low, required torque is small. For this reason, reducing the PWM ON ratio in an interval in which the driving speed is low will prevent excessive output torque. Accordingly, increasing the PWM ON ratio in an interval in which the driving speed is high will increase the output torque in an interval in which the torque is insufficient. This enables a startup operation while reducing a change in speed and vibration even under a condition in which load torque fluctuations are large.

In addition, in some intervals, the driving speed is high and the load torque is small. In those intervals, increasing the driving speed before an interval in which the load is large and the driving speed decreases can reduce a decrease in speed by using rotational energy of rotor 5a, thereby effectively reduce vibration.

Assume that while a differential pressure between the inlet and outlet of compressor 17 is 0.05 MPa or more, an applied voltage is monotonously increased for acceleration without being changed in accordance with a driving speed during one rotation. In this case, because the differential pressure increases load torque fluctuations and speed fluctuations, vibration increases. This leads to, for example, an increase in probability of failure caused by wear of parts of compressor 17. However, increasing a PWM ON ratio in an interval in which a driving speed is high and reducing the PWM ON ratio in an interval in which the driving speed is low can greatly improve reliability as compared with conventional application schemes.

The next will describe a case in which motor drive device 30 according to this exemplary embodiment is used for refrigerator 22 to drive compressor 17.

When compressor 17 is started up, valve 18 is simultaneously opened to cause the outlet of compressor 17 to communicate with condenser 19. Although valve 18 is to be opened at the same time as startup of compressor 17, no problem arises even when the valve is opened slightly before or after the startup. Continuously driving compressor 17 will increase a pressure in condenser 19 and reduce a pressure in evaporator 21 through decompression by decompressor 20. At this time, a high pressure is generated at the outlet of compressor 17 which communicates with condenser 19, and a low pressure is generated at the inlet of compressor 17 which communicates with evaporator 21. Assume that a temperature inside refrigerator 22 has dropped and compressor 17 has stopped. While valve 18 is open, pressures in condenser 19 and evaporator 21 gradually balance each other. Although it depends on a refrigerator system, it takes about 10 minutes to arrive at a balanced state in which a pressure difference between the inlet and outlet of compressor 17 becomes 0.05 MPa or lower. When valve 18 is shifted from an open state to a closed state at the same time as

8

stoppage of compressor 17, the pressure difference between condenser 19 and evaporator 21 is almost maintained, and a pressure difference is left between the outlet and the inlet of compressor 17. Assume that a temperature inside refrigerator 22 has risen, and compressor 17 is to be started up again. A comparison between a case in which compressor 17 is started up from a state in which valve 18 is closed to hold a pressure difference during stoppage of compressor 17 and a case in which compressor 17 is started up from a state in which the pressures balance each other reveals that holding the pressure difference by closing valve 18 requires less power to provide a pressure difference again between condenser 19 and evaporator 21, and hence can achieve more energy saving. Assume also that a temperature inside the refrigerator has arisen before the lapse of 10 minutes that is required to balance between the inlet pressure and the outlet pressure of compressor 17 from stoppage of compressor 17. In this case, the conventional configuration allows compressor 17 to start up only at a pressure difference equal to or lower than 0.05 MPa either in a case in which valve 18 is kept open even during stoppage of compressor 17 or in a case in which no valve 18 is provided. It is therefore necessary for compressor 17 to wait for 10 minutes before starting up. In contrast to this, refrigerator 22 using motor drive device 30 according to this exemplary embodiment can start up even at a differential pressure of 0.05 MPa or higher, and hence can start up at timing at which a temperature inside the refrigerator has arisen and compressor 17 needs to be driven. As compared with a state in which a pressure difference has reached balance, less power is required to provide a pressure difference between condenser 19 and evaporator 21, and hence more energy saving can be achieved.

As described above, according to this exemplary embodiment, motor drive device 30 includes brushless DC motor 5 that drives a load, speed controller 8 that decides a PWM ON ratio for PWM control on brushless DC motor 5, and PWM ON ratio increasing-reducing unit 9. PWM ON ratio increasing-reducing unit 9 sets a PWM ON ratio to a ratio equal to or lower than a PWM ON ratio decided by speed controller 8 in an interval in which a speed of brushless DC motor 5 is lower than a predetermined speed, and sets the PWM ON ratio to a ratio equal to or higher than the PWM ON ratio decided by speed controller 8 in an interval in which the speed of brushless DC motor 5 is higher than the predetermined speed. Motor drive device 30 further includes drive unit 10 that performs PWM control for driving brushless DC motor 5 in accordance with a PWM ON ratio decided by PWM ON ratio increasing-reducing unit 9.

This configuration can suppress excessive output torque in an interval in which required torque is small and a driving speed is low, and increase the output torque in an interval in which the torque is insufficient and the driving speed is high. This makes it possible to start up the device while reducing a speed change and vibration even under a condition in which load torque fluctuations are large. In addition, the configuration can reduce a peak current by reducing a PWM ON ratio to make it difficult for a current to flow in an interval in which an induced voltage of brushless DC motor 5 decreases to make it easy for a current to flow, and the speed of brushless DC motor 5 decreases. This makes it possible to achieve energy saving by using a high-efficiency motor with a small demagnetizing current and a reduction in cost by using an element with a small current rating.

According to this exemplary embodiment, motor drive device 30 is configured to selectively drive compressor 17 in a refrigeration cycle in which compressor 17, condenser 19, decompressor 20, evaporator 21, and compressor 17 are connected in the order named so as to start up while a pressure difference remains between the inlet side and the outlet side of compressor 17. This configuration enables the device to start up even in a state in which there is a pressure difference between the inlet and the outlet of compressor 17. This can reduce a loss in the refrigeration cycle without raising a temperature of evaporator 21 with a simple system configuration at a low cost. In addition, even if a power failure occurs during operation of compressor 17 and power recovery is achieved before balancing between the inlet pressure and the outlet pressure of the compressor, compressor 17 can be immediately started up. This makes it possible to quickly provide cooling even in a bad power supply condition in which power fails frequently.

In addition, this exemplary embodiment is configured to selectively set a pressure difference between the outlet side and the inlet side of compressor 17 to at least a value equal to or higher than 0.05 MPa. This configuration can reduce a loss in a refrigeration cycle while reducing a progress of deterioration due to an increase in vibration and maintaining reliability of compressor 17.

Furthermore, this exemplary embodiment is configured such that motor drive device 30 drives compressor 17 in refrigerator 22 configured to selectively provide valve 18 between compressor 17 and condenser 19 and to close valve 18 at the time of stoppage of compressor 17 and open valve 18 at the time of driving compressor 17. This configuration prevents a high-temperature, high-pressure refrigerant from returning from condenser 19 to compressor 17, and hence can further reduce a loss in a refrigeration cycle without further raising a temperature of evaporator 21.

According to the present invention which has been described above with reference to an example of the exemplary embodiment, position detector 6 detects disappearance of spike voltages, and then detects a position of the rotor from an induced voltage after the detection of the disappearance, thereby performing position detection upon reliably detecting termination of spike voltages. This makes it possible to discriminate position detection from spike voltage detection even with occurrence of an abrupt change in current and to perform accurate position detection without erroneously detecting a motor phase delay and the spike voltage as the induced voltage. This can drive the motor drive device with a stable current waveform.

INDUSTRIAL APPLICABILITY

As has been described above, the present invention provides a motor drive device that can stably start up even while load torque fluctuations are large and a refrigerator employing the device. This device can therefore be widely applied to, for example, compressors in air conditioners, vending machines, showcases, and heat pump water heaters, in addition to refrigerators.

REFERENCE MARKS IN THE DRAWINGS

| | |
|---|---|
| 1: | AC power supply |
| 2: | rectifying circuit |
| 2a, 2b, 2c, 2d: | rectifying diode |
| 3: | smoothing unit |
| 3e: | smoothing capacitor |
| 3f: | reactor |
| 4: | inverter |
| 4a, 4b, 4c, 4d, 4e, 4f: | switching element |
| 4g, 4h, 4i, 4j, 4k, 4l: | reflux diode |
| 5: | brushless DC motor |
| 5a: | rotor |
| 5b: | stator |
| 6: | position detector |
| 7: | speed detector |
| 8: | speed controller |
| 9: | PWM ON ratio increasing-reducing unit |
| 10: | drive unit |
| 17: | compressor |
| 18: | valve |
| 19: | condenser |
| 20: | decompressor |
| 21: | evaporator |
| 22: | refrigerator |
| 30: | motor drive device |

Claims

1. A motor drive device (30) comprising:

a brushless DC motor (5) configured to drive a load, the brushless DC motor (5) including a permanent magnet and a stator (5b) having a three-phase winding;
a speed controller (8) configured to decide a pulse width modulation (PWM) ON ratio for performing PWM control on the brushless DC motor (5);
a PWM ON ratio increasing-reducing unit (9) configured to increase or reduce the PWM ON ratio in accordance with a driving speed of the brushless DC motor (5);
a drive unit (10) configured to perform the PWM control to drive the brushless DC motor (5) in accordance with the PWM ON ratio decided by the PWM ON ratio increasing-reducing unit (9);
a position detector (6) configured to detect a rotational position of a rotor (5a) based on an induced voltage generated in the three-phase winding of the stator (5b); and
a speed detector (7) configured to calculate a current driving speed of the brushless DC motor (5) and an average speed of one past rotation from position information detected by the position detector (6),
**characterized in that**
the PWM ON ratio increasing-reducing unit (9) sets the PWM ON ratio to a ratio equal to or lower than the PWM ON ratio decided by the speed controller (8) in an interval in which the driving speed of the brushless DC motor (5) is lower than a predetermined speed, and sets the PWM ON ratio to a ratio equal to or higher than the PWM ON ratio decided by the speed controller (8) in an interval in which the driving speed is higher than the predetermined speed, wherein the predetermined speed is the average speed of one past rotation.

2. A refrigerator (22) comprising the motor drive device (30) according to claim 1,
   wherein the motor drive device (30) drives a compressor (17) in a refrigeration cycle formed by sequentially connecting the compressor (17), a condenser (19), a decompressor (20), an evaporator (21), and the compressor (17), and starts up while a pressure difference is left between an inlet side and an outlet side of the compressor (17).

3. The refrigerator (22) according to claim 2, wherein the pressure difference is set to not less than 0.05 MPa.

4. The refrigerator (22) according to claim 2 or 3, further comprising a valve (18) provided between the compressor (17) and the condenser (19),
   wherein the valve (18) is closed when the compressor (17) is stopped and is opened when the compressor (17) is operated.

5. The motor drive device (30) according to claim 1, wherein

   the position detector (6) is further configured to detect a zero-cross point by comparing the induced voltage and a reference voltage for the zero-cross point of the induced voltage, and
   the speed detector (7) is further configured to detect a zero-cross point detection interval, which is an interval between the zero-cross point and a next zero-cross point of a plurality of zero-cross points detected during the one past rotation, so as to calculate the average speed of the one past rotation from a sum of the zero-cross point detection intervals.

6. The motor drive device (30) according to claim 5, wherein

   an interval in which a current value of the zero-cross point detection interval is lower than an average of a plurality of the zero-cross point detection intervals of the one past rotation corresponds to the interval in which the driving speed of the brushless DC motor (5) is lower than the predetermined speed, and
   an interval in which the current value of the zero-cross point detection interval is higher than the average of the plurality of the zero-cross point detection intervals of the one past rotation corresponds to the interval in which the driving speed of the brushless DC motor (5) is higher than the predetermined speed.

**Patentansprüche**

1. Motorantriebsvorrichtung (30), enthaltend:

   einen bürstenlosen Gleichstrommotor (5), der so konfiguriert ist, dass er eine Last antreibt, wobei der bürstenlose Gleichstrommotor (5) einen Permanentmagneten und einen Stator (5b) mit einer Dreiphasenwicklung umfasst;
   eine Geschwindigkeitssteuervorrichtung (8), die so konfiguriert ist, dass sie ein EIN-Verhältnis einer Pulsbreitenmodulation (PWM) bestimmt, um eine PWM-Steuerung an dem bürstenlosen Gleichstrommotor (5) durchzuführen;
   eine PWM-EIN-Verhältnis-Erhöhungs-/Reduziereinheit (9), die so konfiguriert ist, dass sie das PWM-EIN-Verhältnis entsprechend einer Antriebsgeschwindigkeit des bürstenlosen Gleichstrommotors (5) erhöht oder verringert;
   eine Antriebseinheit (10), die so konfiguriert ist, dass sie die PWM-Steuerung durchführt, um den bürstenlosen Gleichstrommotor (5) entsprechend dem PWM-EIN-Verhältnis anzutreiben, das durch die PWM-EIN-Verhältnis-Erhöhungs-/Reduziereinheit (9) bestimmt wird;
   einen Positionsdetektor (6), der so konfiguriert ist, dass er eine Drehposition eines Rotors (5a) auf der Grundlage einer in der Dreiphasenwicklung des Stators (5b) erzeugten induzierten Spannung erfasst; und
   einen Geschwindigkeitsdetektor (7), der so konfiguriert ist, dass er eine aktuelle Antriebsgeschwindigkeit des bürstenlosen Gleichstrommotors (5) und eine Durchschnittsgeschwindigkeit von einer vergangenen Umdrehung aus Positionsinformationen berechnet, die von dem Positionsdetektor (6) erfasst wurden,
   **dadurch gekennzeichnet, dass**
   die PWM-EIN-Verhältnis-Erhöhungs-/Reduziereinheit (9) das PWM-EIN-Verhältnis auf ein Verhältnis setzt, das gleich oder niedriger als das PWM-EIN-Verhältnis ist, das von der Geschwindigkeitssteuervorrichtung (8) in einem Intervall bestimmt wird, in dem die Antriebsgeschwindigkeit des bürstenlosen Gleichstrommotors (5) niedriger als eine vorbestimmte Geschwindigkeit ist, und das PWM-EIN-Verhältnis auf ein Verhältnis setzt, das gleich oder höher als das PWM-EIN-Verhältnis ist, das von der Geschwindigkeitssteuervorrichtung (8) in einem Intervall bestimmt wird, in dem die Antriebsgeschwindigkeit höher als die vorbestimmte Geschwindigkeit ist, wobei die vorbestimmte Geschwindigkeit die Durchschnittsgeschwindigkeit einer vergangenen Umdrehung ist.

2. Kühlschrank (22) enthaltend die Motorantriebsvorrichtung (30) nach Anspruch 1,
wobei die Motorantriebsvorrichtung (30) einen Verdichter (17) in einem Kältekreislauf antreibt, der durch sequentielles Verbinden des Verdichters (17), eines Kondensators (19), eines Druckminderers (20), eines Verdampfers (21) und des Verdichters (17) gebildet wird, und anläuft, während eine Druckdifferenz zwischen einer Einlassseite und einer Auslassseite des Verdichters (17) verbleibt.

3. Kühlschrank (22) nach Anspruch 2, wobei die Druckdifferenz auf nicht weniger als 0,05 MPa eingestellt ist.

4. Kühlschrank (22) nach Anspruch 2 oder 3, ferner enthaltend ein Ventil (18), das zwischen dem Verdichter (17) und dem Kondensator (19) vorgesehen ist,
wobei das Ventil (18) geschlossen ist, wenn der Verdichter (17) angehalten wird, und geöffnet ist, wenn der Verdichter (17) betrieben wird.

5. Motorantriebsvorrichtung (30) nach Anspruch 1, wobei

der Positionsdetektor (6) ferner so konfiguriert ist, dass er einen Nulldurchgangspunkt erfasst, indem er die induzierte Spannung und eine Referenzspannung für den Nulldurchgangspunkt der induzierten Spannung vergleicht, und
der Geschwindigkeitsdetektor (7) ferner so konfiguriert ist, dass er ein Nulldurchgangspunkt-Erfassungsintervall erfasst, das ein Intervall zwischen dem Nulldurchgangspunkt und einem nächsten Nulldurchgangspunkt von mehreren Nulldurchgangspunkten ist, die während der einen vergangenen Umdrehung erfasst wurden, um so die Durchschnittsgeschwindigkeit der einen vergangenen Umdrehung aus einer Summe der Nulldurchgangspunkt-Erfassungsintervalle zu berechnen.

6. Motorantriebsvorrichtung (30) nach Anspruch 5, wobei

ein Intervall, in dem ein aktueller Wert des Nulldurchgangspunkt-Erfassungsintervalls niedriger ist als ein Mittelwert der mehreren Nulldurchgangspunkt-Erfassungsintervalle der einen vergangenen Umdrehung, dem Intervall entspricht, in dem die Antriebsgeschwindigkeit des bürstenlosen Gleichstrommotors (5) niedriger ist als die vorbestimmte Geschwindigkeit, und
ein Intervall, in dem der aktuelle Wert des Nulldurchgangspunkt-Erfassungsintervalls höher ist als der Mittelwert der mehreren Nulldurchgangspunkt-Erfassungsintervalle der einen vergangenen Umdrehung, dem Intervall entspricht, in dem die Antriebsgeschwindigkeit des bürstenlosen Gleichstrommotors (5) höher ist als die vorbestimmte Geschwindigkeit.

## Revendications

1. Dispositif d'entraînement de moteur (30) comprenant :

un moteur à courant continu sans balai (5) conçu pour entraîner une charge, le moteur à courant continu sans balai (5) comprenant un aimant permanent et un stator (5b) présentant un enroulement triphasé ;
un dispositif de commande de vitesse (8) conçu pour décider d'un rapport MARCHE à modulation d'impulsions en durée (MID) pour effectuer une commande à MID sur le moteur à courant continu sans balai (5) ;
une unité d'augmentation-réduction de rapport MARCHE à MID (9) conçue pour augmenter ou réduire le rapport MARCHE à MID en fonction d'une vitesse d'entraînement du moteur à courant continu sans balai (5) ;
une unité d'entraînement (10) conçue pour exécuter la commande à MID pour entraîner le moteur à courant continu sans balai (5) en fonction du rapport MARCHE à MID décidé par l'unité d'augmentation-réduction de rapport MARCHE à MID (9) ;
un détecteur de position (6) conçu pour détecter une position de rotation d'un rotor (5a) sur la base d'une tension induite générée dans l'enroulement triphasé du stator (5b) ; et
un détecteur de vitesse (7) conçu pour calculer une vitesse d'entraînement actuelle du moteur à courant continu sans balai (5) et une vitesse moyenne d'une rotation passée à partir d'informations de position détectées par le détecteur de position (6),

**caractérisé en ce que**
l'unité d'augmentation-réduction de rapport MARCHE à MID (9) règle le rapport MARCHE à MID à un rapport égal ou inférieur au rapport MARCHE à MID décidé par le dispositif de commande de vitesse (8) dans un intervalle dans lequel la vitesse d'entraînement du moteur à courant continu sans balai (5) est inférieure à une vitesse prédéterminée et règle le rapport MARCHE à MID à un rapport égal ou supérieur au rapport MARCHE à MID décidé par le dispositif de commande de vitesse (8) dans un intervalle dans lequel la vitesse d'entraînement est supérieure à la vitesse prédéterminée, la vitesse prédéterminée étant la vitesse moyenne d'une rotation passée.

2. Réfrigérateur (22) comprenant le dispositif d'entraînement de moteur (30) selon la revendication 1,
le dispositif d'entraînement de moteur (30) entraînant un compresseur (17) dans un cycle de réfrigération formé par liaison séquentielle du compresseur (17), d'un condenseur (19), d'un décompresseur (20), d'un évaporateur (21) et du compresseur (17) et démarrant tandis qu'une différence de pression est laissée entre un côté d'entrée et un côté de sortie du compresseur (17).

3. Réfrigérateur (22) selon la revendication 2, la différence de pression étant réglée à pas moins de 0,05 MPa.

4. Réfrigérateur (22) selon la revendication 2 ou 3, comprenant en outre une vanne (18) disposée entre le compresseur (17) et le condenseur (19),
la vanne(18) étant fermée lorsque le compresseur (17) est arrêté et étant ouverte lorsque le compresseur (17) fonctionne.

5. Dispositif d'entraînement de moteur (30) selon la revendication 1,

le détecteur de position (6) étant en outre conçu pour détecter un point de passage par zéro en comparant la tension induite et une tension de référence pour le point de passage par zéro de la tension induite et
le détecteur de vitesse (7) étant en outre conçu pour détecter un intervalle de détection de point de passage par zéro, qui est un intervalle entre le point de passage par zéro et un point de passage par zéro suivant parmi une pluralité de points de passage par zéro détectés pendant ladite une rotation passée, de façon à calculer la vitesse moyenne de ladite une rotation passée à partir d'une somme d'intervalles de détection de point de passage par zéro.

6. Dispositif d'entraînement de moteur (30) selon la revendication 5,

un intervalle dans lequel une valeur actuelle de l'intervalle de détection de point de passage par zéro est inférieure à une moyenne d'une pluralité d'intervalles de détection de point de passage par zéro de ladite une rotation passée correspondant à l'intervalle dans lequel la vitesse d'entraînement du moteur à courant continu sans balai (5) est inférieure à la vitesse prédéterminée et
un intervalle dans lequel la valeur actuelle de l'intervalle de détection de point de passage par zéro est supérieure à la moyenne de la pluralité d'intervalles de détection de point de passage par zéro de ladite une rotation passée correspondant à l'intervalle dans lequel la vitesse d'entraînement du moteur à courant continu sans balai (5) est supérieure à la vitesse prédéterminée.

# FIG. 1

DRIVE UNIT

PWM ON RATIO
INCREASING/
REDUCING UNIT

POSITION
DETECTOR

SPEED
CONTROLLER

SPEED
DETECTOR

# FIG. 2

PWM ON RATIO

TIME FROM
ZERO-CROSS POINT

AVERAGE PWM ON
RATIO FROM
ZERO-CROSS POINT

TIME FROM
ZERO-CROSS POINT

# FIG. 3

```
                    ┌──────────────┐
                    │    START     │
                    └──────┬───────┘
                           │
              ┌────────────▼────────────┐
              │  RESET ZERO-CROSS       │——— STEP201
              │  POINT DETECTION TIMER  │
              └────────────┬────────────┘
                           │
              ┌────────────▼────────────┐
              │  START ZERO-CROSS       │——— STEP202
              │  POINT DETECTION TIMER  │
              └────────────┬────────────┘
                           │        STEP203
                        ◇◇◇◇◇◇◇◇◇◇
                     HAS ELAPSED TIME
                   OF ZERO-CROSS POINT      YES
                    DETECTION TIMER
                     REACHED T1?
```

**STEP203** — HAS ELAPSED TIME OF ZERO-CROSS POINT DETECTION TIMER REACHED T1?  — YES / NO

**STEP204** — SET PWM ON RATIO TO Ra1

**STEP206** — HAS ELAPSED TIME OF ZERO-CROSS POINT DETECTION TIMER REACHED T3?  — YES / NO

**STEP207** — SET DUTY OUTPUT TO Ra3

**STEP208** — SET DUTY OUTPUT TO Ra2

**STEP205** — HAS ZERO-CROSS POINT BEEN DETECTED?  — NO / YES

END

# FIG. 4

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10028395 A
- US 20060261766 A
- JP 2004254460 A